# EUROPÄISCHE PATENTSCHRIFT

(11) **EP 1 713 658 B1**
(45) Veröffentlichungstag und Bekanntmachung des Hinweises auf die Patenterteilung: **24.02.2010**
(21) Anmeldenummer: 04804741.9
(22) Anmeldetag: 09.12.2004
(51) Int. Cl.: B60K 31/00

(54) **ABSTANDSREGELSYSTEM FÜR KRAFTFAHRZEUGE**
DISTANCE CONTROL SYSTEM FOR MOTOR VEHICLES
SYSTEME DE REGULATION DE DISTANCE DESTINE A DES VEHICULES

(30) Priorität: 03.02.2004 DE 102004005229
(43) Veröffentlichungstag der Anmeldung: 25.10.2006
(73) Patentinhaber: ROBERT BOSCH GMBH, 70442 Stuttgart (DE)
(72) Erfinder: MICHI, Harald, 75248 Oelbronn-Duerrn (DE); BRAEUCHLE, Goetz, 74934 Reichartshausen (DE); HOFMANN, Holger, 74747 Ravenstein/Ot Merchingen (DE)
(86) Internationale Anmeldenummer: PCT/EP2004/053366
(87) Internationale Veröffentlichungsnummer: WO 2005/075238

(56) Entgegenhaltungen:
- DE-A1- 10 015 299
- DE-A1- 10 231 687

## Beschreibung

### Stand der Technik

Die Erfindung betrifft ein Abstandsregelsystem für Kraftfahrzeuge, mit einem Sensorsystem zur Erfassung von Daten über ein Zielobjekt und über das eigene Fahrzeug, einem Aktorsystem zur Steuerung der Längsbewegung des Fahrzeugs, einem Regler, der innerhalb bestimmter Eingriffsgrenzen in das Aktorsystem eingreift, um bezüglich des Abstands zum Zielobjekt ein definiertes Regelungsziel einzuhalten, und einer Ausgabeeinrichtung zur Ausgabe einer Übernahmeaufforderung an den Fahrer, wenn das Regelungsziel nicht einzuhalten ist.

Bei Kraftfahrzeugen werden zunehmend Abstandsregelsysteme eingesetzt, die auch als ACC-Systeme (Adaptive Cruise Control) bezeichnet werden und dazu dienen, den Abstand des eigenen Fahrzeugs zu einem vorausfahrenden Fahrzeug automatisch zu regeln. Das Sensorsystem weist z. B. einen Radarsensor auf, mit dem die Abstände und Relativgeschwindigkeiten sowie zumeist auch die Richtungswinkel vorausfahrender Fahrzeuge gemessen werden können. Anhand des gemessenen Richtungswinkels läßt sich entscheiden, welches der georteten Fahrzeuge sich auf der eigenen Fahrspur befindet und somit ein relevantes Zielobjekt für die Abstandsregelung darstellt. Das Regelungsziel besteht typischerweise darin, einen bestimmten Sollabstand zu diesem Zielobjekt einzuhalten oder zumindest eine signifikante Unterschreitung diese Sollabstands zu vermeiden. Der Sollabstand ist zweckmäßigerweise geschwindigkeitsabhängig und wird zumeist über eine Sollzeitlücke definiert, die den zeitlichen Abstand angibt, in dem die beiden Fahrzeuge denselben Punkt auf der Fahrbahn passieren. Der Regler berechnet anhand der vom Radarsensor gemessenen Daten beispielsweise eine positive oder negative Sollbeschleunigung, die zur Einhaltung des Sollabstands erforderlich ist, und greift entsprechend dieser Sollbeschleunigung über das Aktorsystem in den Antriebsstrang und erforderlichenfalls auch in das Bremssystem des Fahrzeugs ein.

Um ein komfortables Systemverhalten zu erreichen und um physikalische Gegebenheiten des Aktorsystems sowie sicherheitstechnische Belange zu berücksichtigen, ist die Sollbeschleunigung, die letztlich an das Aktorsystem ausgegeben wird, durch eine obere und/oder untere Eingriffsgrenze beschränkt. Diese Begrenzung kann jedoch zur Folge haben, daß die automatische Längsgeschwindigkeitsregelung bzw. Längsbeschleunigungsregelung des eigenen Fahrzeugs in kritischen Verkehrssituationen ein Auffahren auf das vordere Fahrzeug nicht verhindern kann. Ein wichtiger Bestandteil der bekannten ACC-Systeme ist deshalb eine Ausgabeeinrichtung, über die in solchen Fällen eine Übernahmeaufforderung an den Fahrer ausgegeben werden kann. Auf diese Weise wird der Fahrer aufgefordert, selbst die Kontrolle über das Fahrzeug zu übernehmen und die kritische Situation zu beherrschen, wobei der Fahrer nicht an die Eingriffsgrenzen des Regelsystems gebunden ist. Beispielsweise wird eine solche Übernahmeaufforderung bei bekannten Systemen dann ausgegeben, wenn der Regler eine Sollbeschleunigung berechnet, die zur Einhaltung des Sollabstands erforderlich wäre, jedoch außerhalb der Eingriffsgrenzen des Systems liegt. Zur Beherrschung der kritischen Fahrsituation ist es dann zumeist erforderlich, daß der Fahrer hinreichend rasch und/oder energisch genug aktiv in das Geschehen eingreift.

Aus der DE 102 31 687 A1 ist eine Vorrichtung und ein Verfahren zur Benachrichtigung des Fahrers eines Kraftfahrzeugs bekannt, das mit einem adaptiven Abstands- und Geschwindigkeitsregler ausgestattet ist, und bei dem eine Übernahmeaufforderung aktiviert wird, die dem Fahrer mitteilt, dass eine kritische Annäherung an ein Zielobjekt erfolgt. Die Aktivierung bzw. Deaktivierung der Übernahmeaufforderung erfolgt in Abhängigkeit eines festen Mindestabstandes des abstands- und geschwindigkeitsgeregelten Fahrzeugs zum Zielobjekt und/oder eines relativgeschwindigkeitsabhängigen Mindestabstandes des abstands- und geschwindigkeitsgeregelten Fahrzeugs in Bezug auf ein Zielobjekt und/oder einer maximalen, vom Abstands- und Geschwindigkeitsregler erzeugbaren Fahrzeugverzögerung. Dieses Dokument stellt den nächstliegenden Stand der Technik nach der Präambel von Anspruch 1 dar.

### Vorteile der Erfindung

Die Erfindung mit den in Anspruch 1 angegebenen Merkmalen bietet den Vorteil, daß eine vorausschauende Ausgabe der Übernahmeaufforderung ermöglicht wird, so daß dem Fahrer mehr Zeit für eine angemessene Reaktion verbleibt. Auf diese Weise wird die Verkehrssicherheit erhöht und der Fahrkomfort verbessert, da die vom Fahrer zu veranlassen-den Beschleunigungsänderungen weniger heftig auszufallen brauchen. Zugleich wird auf diese Weise der Fahrer entlastet und die Häufigkeit des Auftretens von Streß-Situationen reduziert.

Dies wird erfindungsgemäß durch ein Prädiktionssystem erreicht, das die künftige Entwicklung der Verkehrssituation, insbesondere das dynamische Verhalten des eigenen Fahrzeugs und des Zielobjekts, in die Zukunft extrapoliert, so daß die Übernahmeaufforderung bereits zu einem Zeitpunkt ausgegeben werden kann, in dem eine Konfliktsituation, die ein Eingreifen des Fahrers erforderlich macht, zwar absehbar aber noch nicht tatsächlich eingetreten ist.

Als Beispiel kann etwa die Situation betrachtet werden, daß das eigene Fahrzeug auf ein langsameres vorausfahrendes Fahrzeug auffährt und der Fahrer des vorausfahrenden Fahrzeugs zu einem Zeitpunkt, zu dem der tatsächliche Fahrzeugabstand noch größer ist als der Sollabstand, eine Vollbremsung einleitet. Der Regler des ACC-Systems wird zwar die Geschwindigkeitsänderung des vorausfahrenden Fahrzeugs registrieren und gegebenenfalls eine moderate Geschwindigkeitsanpassung vornehmen, doch wird das normale Regelverhalten in diesem Fall nur durch die im aktuellen Zeitpunkt vorhandenen Abstands- und Geschwindigkeitsdaten bestimmt. Der Regler ist im allgemeinen nicht darauf programmiert, "vorherzusehen", daß der Fahrer des vorausfahrenden Fahrzeugs, der die Vollbremsung eingeleitet hat, voraussichtlich den Bremsvorgang fortsetzen und das Fahrzeug gegebenenfalls bis in den Stand bremsen wird, so daß eine entsprechend energische Verzögerung des eigenen Fahrzeugs erforderlich ist. Mit dem erfindungsgemäßen Prädiktionssystem ist es dagegen möglich, das voraussichtliche dynamische Verhalten des vorausfahreriden Fahrzeugs zumindest nährungsweise vorherzusagen und anhand des Ergebnisses dieser Vorhersage erforderlichenfalls schon frühzeitig die Übernahmeaufforderung auszugeben, so daß dem Fahrer mehr Reaktionszeit verbleibt.

Vorteilhafte Ausgestaltungen der Erfindung ergeben sich aus den Unteransprüchen.

Bevorzugt wird durch das Prädiktionssystem eine feste oder varibale Prädiktionszeit bestimmt, die angibt, wie weit die dynamischen Daten der Fahrzeuge in die Zukunft extrapoliert werden sollen. Anhand eines fahrdynamischen Modells für das Zielobjekt werden dann auf der Grundlage der aktuellen dynamischen Daten und gegebenenfalls weitere Informationen Schätzwerte oder Vorhersagewerte für die dynamischen Daten des Zielobjekts zur Prädiktionszeit berechnet. Bei diesen dynamischen Daten kann es sich um die Beschleunigung, die Geschwindigkeit und den Ort des Zielobjekts handeln. Entsprechend werden in einem.fahrdynamischen Modell für das eigene Fahrzeug die dynamischen Daten des eigenen Fahrzeugs für den Prädiktionszeitpunkt vorhergesagt. Aus der vorhergesagten Geschwindigkeit des eigenen Fahrzeugs und der Sollzeitlücke, die zumeist innerhalb bestimmter Grenzen vom Fahrer einstellbar ist, wird dann der Sollabstand für den Prädiktionszeitpunkt berechnet. Dieser prädizierte Sollabstand wird dann mit einem aufgrund der dynamischen Daten des Zielobjekts prädizierten Istabstand zum Prädiktionszeitpunkt verglichen, und wenn diese Abstände ein bestimmtes Kriterium für die Fahrer-Übernahmeaufforderung (FÜA-Kriterium) erfüllen, wird die Übernahmeaufforderung entweder sofort oder mit einer geeigneten zeitlichen Verzögerung ausgegeben.

Das FÜA-Kriterium ist generell so beschaffen, daß die Übernahmeaufforderung erfolgt, bevor die vom Regler berechnete Sollbeschleunigung die Eingriffsgrenzen überschreitet. Falls die Verkehrssituation sich anders entwickelt, als vom Prädiktionssystem vorhergesagt wurde, kann es durchaus sein, daß die Situation durch das normale Regelverhalten des Reglers beherrscht werden kann und kein Eingriff des Fahrers erforderlich ist. Die Übernahmeaufforderung ist dann eine vorbeugende Maßnahme, durch die in kritischen Situationen sicherheitshalber die Aufmerksamkeit des Fahrers erhöht wird.

Bevorzugt ist ein Adaptionsmodul vorgesehen, mit dem die Prädiktionszeit anhand relevanter Daten, beispielsweise der Verkehrsdichte, der Geschwindigkeit des eigenen Fahrzeugs und dergleichen dynamisch variiert wird. In entsprechender Weise kann auch das FÜA-Kriterium dynamisch modifiziert werden.

### Zeichnung

Ein Ausführungsbeispiel der Erfindung ist in den Zeichnungen dargestellt und in der nachfolgenden Beschreibung näher erläutert.

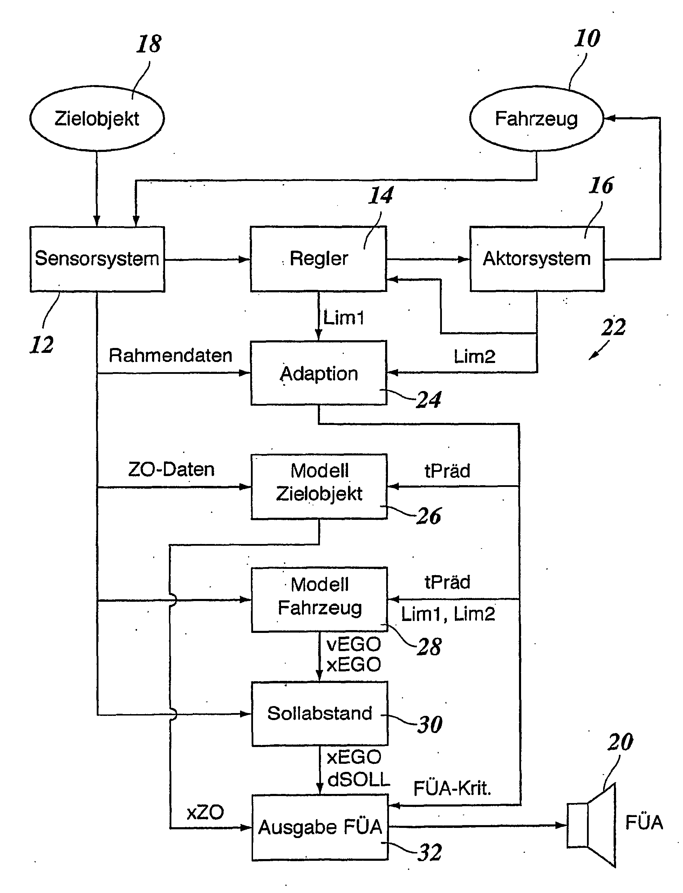

Die einzige Zeichnungsfigur zeigt ein Blockdiagramm eines erfindungsgemäßen Abstandsregelsystems.

### Beschreibung des Ausführungsbeispiels

Ein Regelsystem für ein Kraftfahrzeug 10, im folgenden als das "eigene Fahrzeug" bezeichnet, umfaßt ein Sensorsystem 12, einen Regler 14, der beispielsweise durch einen oder mehrere Mikroprozessoren gebildet wird, und ein Aktorsystem 16, über das die positive oder negative Beschleunigung des Fahrzeugs 10 beeinflußt wird. In an sich bekannter Weise umfaßt das Sensorsystem 12 z. B. einen Radarsensor, mit dem der Abstand und die Relativgeschwingkeit eines Zielobjekts 18, typischerweise eines unmittelbar vorausfahrenden Fahrzeugs, gemessen werden. Zumeist ist der Radarsensor darüber hinaus auch in der Lage, Fahrzeuge auf Nebenspuren sowie weiter vorn auf der eigenen Fahrspur fahrende Fahrzeuge zu erfassen. Zu dem Sensorsystem 12 gehört außerdem eine Anzahl von bekannten Sensoren, die über den zustand des eigenen Fahrzeugs 10 Auskunft gegen, insbesondere über dessen Geschwindigkeit, die aktuell gewählte Getriebestufe und dergleichen. Darüber hinaus können auch weitere Daten des Fahrzeugs erfaßt werden, etwa die vom Fahrer gewählten Einstelloptionen für die Sollzeitlücke, mit der das Zielobjekt 18 verfolgt werden soll, und gegebenenfalls die Zuladung des Fahrzeugs, der Bremsenzustand, die Griffigkeit der Fahrbahn und dergleichen. Ebenso können von dem Sensorsystem 12 auch Umweltdaten wie etwa Witterungsbedingungen erfaßt werden.

Im Rahmen der normalen ACC-Regelung meldet das Sensorsystem 12 an den Regler 14 zumindest den Abstand und die Relativgeschwindigkeit des Zielobjekts 18 sowie die Absolutgeschwindigkeit des eigenen Fahrzeugs 10 und die eingestellte Sollzeitlücke. Anhand dieser Daten berechnet der Regler 14 zunächst eine vorläufige Sollbeschleunigung. Wenn diese Sollbeschleunigung unterhalb einer oberen Beschleunigungsgrenze und oberhalb einer unteren (negativen) Beschleunigungsgrenze liegt, wird sie unmittelbar an das Aktorsystem 16 ausgegeben, um die Geschwindigkeit des Fahrzeugs anzupassen. Die oberen und unteren Beschleunigungsgrenzen sind unter Komfort und Sichterheitsüberlegungen bestimmt und können gegebenenfalls vom Fahrer je nach seinen individuellen Komfortansprüchen modifiziert werden. Im allgemeinen sind diese Grenzen, die im folgenden als "weiche Eingriffsgrenzen" bezeichnet werden sollen, aber enger als die Grenzen für die Beschleunigungen, die mit dem Aktorsystem 16, dem Antriebsstrang und dem Bremssystem des Fahrzeugs 10, tatsächlich realisierbar sind. Die tatsächlichen physikalischen Grenzen, die vom Beladungszustand des Fahrzeugs, vom Fahrbahnzustand und dergleichen abhängig sein können, sollen im folgenden als "harte Eingriffsgrenzen" bezeichnet werden.

Wenn die vom Regler berechnete Sollbeschleunigung außerhalb der harten oder weichen Eingriffsgrenzen liegt, insbesondere wenn die berechnete Bremsverzögerung dem Betrage nach größer ist als die zulässige oder erreichbare Bremsverzögerung, gibt der Regler 14 über eine Ausgabeeinrichtung 20, beispielsweise einem Lautsprecher, eine Übernahmeaufforderung FÜA an den Fahrer aus. An das Aktorsystem 16 wird in diesem Fall als Befehlssignal nur die betreffende Grenzbeschleunigung übermittelt.

Das hier beschriebene Abstandsregelsystem weist zusätzlich ein Prädiktionssystem 22 auf, mit dem es möglich ist, unter bestimmten Bedingungen die Fahrer-Übernahmeaufforderung schon zu einem früheren Zeitpunkt auszugeben. Dieses Prädiktionssystem umfaßt ein Adaptionsmodul 24, ein fahrdynamisches Model 26 des Zielobjekts 18, ein fahrdynamisches Model 28 des eigenen Fahrzeugs 10, ein Prädiktionsmodul 30 und ein Entscheidungsmodul 32 für die Ausgabe der Übernahmeaufforderung.

Das Adaptionsmodul 24 erhält vom Sensorsystem 12 bestimmte Informationen, die als "Rahmendaten" bezeichnet werden und die aktuellen Betriebsbedingungen des Systems kennzeichnen, und vom Regler 14 und vom Aktorsystem 16 Signale Lim1, Lim2, die die weichen und harten Eingriffgrenzen repräsentieren. Anhand dieser Daten bestimmt das Adaptionsmodul 24 einen Prädiktionstzeitpunkt tPräd, d. h., einen in der Zukunft liegenden Zeitpunkt, für den die voraussichtliche Entwicklung der Verkehrssituation prädiziert werden soll. Weiterhin bestimmt das Adaptionsmodul 24 anhand der ihm zur Verfügung stehenden Daten ein geeignetes Kriterium für die im Entscheidungsmodul 32 zutreffende Entscheidung über die Ausgabe der Übernahmeaufforderung.

Das Model 26 für das Zielobjekt erhält vom Sensorsystem 12, speziell vom Radarsensor, die dynamischen Daten des Zielobjekts, also dessen Abstand und Relativgeschwindigkeit, und berechnet daraus gegebenenfalls höhere zeitliche Ableitungen und prädiziert durch Integration, anhand geeigneter Modelannahmen, die voraussichtlichen dynamischen Daten des Zielobjekts 18 (Beschleunigung, Geschwindigkeit und Abstand) zum Prädiktionszeitpunkt tPräd.

Entsprechend prädiziert das Model 28 für das eigene Fahrzeug anhand der dynamischen Daten des eigenen Fahrzeugs sowie anhand des bekannten Regelverhaltens des Reglers 14 und insbesondere der Eingriffsgrenzen Lim1, Lim2 die dynamischen Daten (z. B. Beschleunigung, Geschwindigkeit und Ort) des eigenen Fahrzeugs 10 zum Prädiktionszeitpunkt tPräd.

Aus diesen dynamischen Daten, insbesondere aus der prädizierten Eigengeschwindigkeit vEGO zum Zeitpunkt tPräd sowie weiterer von Sensorsystem 12 bereitgestellter Daten, insbesondere der Sollzeitlücke, berechnet das Prädiktionsmodul 30 einen prädizierten Sollabstand dSOLL für die Zeit tPräd. Dieser Sollabstand sowie der prädizierte Ort xEGO des eigenen Fahrzeugs 10 und der vom Model 26 prädizierte Ort xZO des Zielobjekts 18 werden im Entscheidungsmodul 32 dazu benutzt, den prädizierten Istabstand des Zielobjekts 18 zu.berechnen und mit dem prädizierten Sollabstand dSOLL zu vergleichen, um dann anhand des vom Adaptionsmodul 24 bestimmten Entscheidungskriteriums zu entscheiden, ob eine Übernahmeaufforderung FÜA auszugeben ist.

Der Prädiktionszeitpunkt tPräd wird vom Adaptionsmodul 24 situationsabhängig variiert. Dabei können die vom Sensorsystem 12 gemeldeten Rahmendaten und die Eingriffsgrenzen auf vielfältige Weise berücksichtigt werden, wie im folgenden lediglich anhand von Beispielen erläutert werden soll. Ein wesentlicher Parameter ist die aktuelle Eigengeschwindigkeit des Fahrzeugs 10. Während bei Fahrten mit hoher Geschwindigkeit, beispielsweise auf Autobahnen, zumeist große Sicherheitsabstände eingehalten werden und somit kurze Prädiktionszeiten akzeptabel sind, ist es bei mittleren bis kleinen Geschwindigkeiten vorteilhaft, eine längere Prädiktionszeit zu wählen, da hier eine frühzeitige Übernahmeaufforderung und eine entsprechend frühzeitige Reaktion des Fahrers von hoher Bedeutung ist. Auch eine hohe Dynamik der Verkehrssituation, die beispielsweise durch häufige oder starke Geschwindigkeitsänderungen gekennzeichnet ist, spricht für eine lange Prädiktionszeit, ebenso die Verkehrsdichte, die anhand der Daten des Radarsensors abgeschätzt werden kann. Die vom Fahrer gewählte Sollzeitlücke sollte in die Prädiktionszeit in die Weise einfließen, daß bei kurzer Sollzeitlücke eine frühzeitigere Übernahmeaufforderung erfolgt. Weitere Kriterien, die für eine lange Prädiktionszeit sprechen und mit geeigneten Sensoren erfaßt werden können, sind etwa die Fahreraufmerksamkeit und die Fahrerbelastung. Zum Beispiel sind Ermüdungssensoren bekannt, die beim Fahrer Anzeichen von Ermüdung erkennen können, so daß dann die Prädiktionszeit verlängert werden kann. Anzeichen für erhöhte Fahrerbelastung wären etwa Zustände, die erwarten lassen, daß der Fahrer durch andere Aufgaben abgelenkt ist, beispielsweise ein laufendes Telefongespräch über eine Freisprecheinrichtung oder die Aktivität eines Navigationssystems. Ebenso kann die Prädiktionszeit auch durch die weichen oder harten Eingriffsgrenzen beeinflußt werden. Wenn beispielsweise mit Hilfe eines zumeist im Bremssystem vorhandenen Schlupfsensors eine eisglatte Fahrbahn erkannt wird, oder allgemein bei Temperaturen unter dem Gefrierpunkt, wird man eine längere Prädiktionszeit wählen, um dem möglicherweise verlängerten Bremswegen Rechnung zu tragen.

Das Model 26 für das Zielobjekt 18 kann beispielsweise so ausgebildet sein, daß es die Bewegungsvariablen des Zielobjekts unter der Annahme einer konstanten Beschleunigung integriert. Denkbar wäre auch die Annahme einer konstanten Änderungsrate der Beschleunigung oder, allgemein, eine Taylor-Entwicklung n-ter-Ordnung der Bewegungsvariablen auf der Grundlage der aktuellen zeitlichen Ableitungen. Es sind jedoch auch Weiterbildungen denkbar, die auf eine differenziertere Bewertung des Verkehrsgeschehens abstellen. Beispielsweise könnten hier auch die vom Radarsystem gemeldeten Änderungen des Bewegungszustands des übernächsten Fahrzeugs oder noch weiter vorn fahrender Fahrzeuge berücksichtigt werden oder auch das im Ansatz erkennbare Einscheren eines langsameren Fahrzeugs von einer Nebenspur auf die eigene Spur.

Das Model 28 des eigenen Fahrzeugs beruht im Kern auf einer Integration der Bewegungsvariablen, hier jedoch unter Berücksichtigung des bekannten Regelverhaltens des Reglers 14 und insbesondere der bekannten Eingriffsgrenzen Lim1, Lim2.

Im Prädiktionsmodul 30 braucht im Prinzip nur die voreingestellte Sollzeitlücke mit der vom Modul 28 prädizierten Eigengeschwindigkeit vEGO multipliziert zu werden. Gegebenenfalls kann ein zusätzlicher Sicherheitsabstand addiert werden, der entweder fest vorgegeben ist oder von den verfügbaren Rahmendaten abhängig ist.

Da in den Modellen 26 und 28 die absoluten Beschleunigungen des Fahrzeugs 10 und des Zielobjekts 18 integriert werden, ist es zweckmäßig, den Ort xEGO des eigenen Fahrzeugs und den Ort xZO des Zielobjekts zunächst in absoluten Koordinaten zu berechnen und dann die Differenz der Ortskoordinaten als den prädizierten Istabstand zum Zeitpunkt tPräd zu nehmen. Der Vergleich zwischen Soll- und Istabstand im Entscheidungsmodul 32 kann beispielsweise dadurch erfolgen, daß der Quotient aus Istabstand und Sollabstand berechnet wird. Das Entscheidungskriterium für die Übernahmeaufforderung kann dann im einfachsten Fall in einem Schwellenwertvergleich mit einem durch das Adaptionsmodul 24 bestimmten Schwellenwert (< 1) bestehen. Es sind jedoch auch komplexere Kriterien denkbar, bei denen auch zusätzliche dynamische Variablen des eigenen Fahrzeugs und des Zielobjekts berücksichtigt werden können, die von den Modellen 26 und 28 bereitgestellt werden. Ebenso ist es gemäß einer Weiterbildung auch ein Algoritmus für das FÜA-Kriterium denkbar, der die Verläßlichkeit der Prädiktion bewertet und gegen das Gefahrenpotenzial abwägt. Bei geringem Gefahrenpotenzial der Situation und geringer Verläßlichkeit der Prädiktion kann dann die Ausgabe der Übernahmeaufforderung erst nach einer kurzen Verzögerungszeit erfolgen oder ganz unterbleiben, falls sich die Situation von selbst entschärft.

## Patentansprüche

1. Abstandsregelsystem für Kraftfahrzeuge, mit einem Sensorsystem (12) zur Erfassung von Daten über ein Zielobjekt (18) und über das eigene Fahrzeug (10), einem Aktorsystem (16) zur Steuerung der Längsbewegung des Fahrzeugs (10), einem Regler (14), der innerhalb bestimmter Eingriffsgrenzen (Lim1, Lim2) in das Aktorsystem (16) eingreift, um bezüglich des Abstands zum Zielobjekt (18) ein definiertes Regelungsziel einzuhalten, und einer Ausgabeeinrichtung (20) zur Ausgabe einer Übernahmeaufforderung (FÜA) an den Fahrer, wenn das Regelungsziel nicht einzuhalten ist, mit einem Prädiktionssystem (22) zur Prädiktion einer Konfliktsituation, in der das Regelungsziel nicht einzuhalten ist, und zur Auslösung der Übernahmeaufforderung (FÜA) vor Eintritt der Konfliktsituation, **dadurch gekennzeichnet, daß** das Prädiktionssystem (22) fahrdynamische Modelle (26, 28) des Zielobjekts (18) und des eigenen Fahrzeugs (10) umfaßt, zur Berechnung von Vorhersagewerten (vEGO), xZO) für fahrdynamische Variable des eigenen Fahrzeugs und des Zielobjekts zu einem bestimmten Prädiktionszeitpunkt (tPräd).

2. Abstandsregelsystem nach Anspruch 1, **dadurch gekennzeichnet, daß** das Prädiktionssystem (22) dazu ausgebildet ist, aus den Vorhersagewerten einen voraussichtlichen Sollabstand und einen voraussichtlichen Istabstand zwischen dem Zielobjekt (18) und dem eigenen Fahrzeug (10) zum Prädiktionszeitpunkt (tPräd) zu berechnen und die Übernahmeaufforderung (FÜA) auszulösen, wenn die Beziehung zwischen Soll- und Istabstand ein bestimmtes Auslösekriterium erfüllt.

3. Abstandsregelsystem nach Anspruch 2, **dadurch gekennzeichnet, daß** das Auslösekriterium ein Schwellenwert für den Quotienten aus Ist- und Sollabstand ist.

4. Abstandsregelsystem nach einem der Ansprüche 1 bis 3, **gekennzeichnet durch** ein Adaptionsmodul (24), das dazu ausgebildet ist, den Prädiktionszeitpunkt (tPräd) in Abhängigkeit von Daten, die vom Sensorsystem (12) bereitgestellt werden, dynamisch zu variieren.

5. Abstandsregelsystem nach einem der Ansprüche 1 bis 4, **gekennzeichnet durch** ein Adaptionsmodul (24), das dazu ausgebildet ist, das Auslösekriterium für die Übernahmeaufforderung (FÜA) in Abhängigkeit von Daten, die vom Sensorsystem (12) bereitgestellt werden, dynamisch zu variieren.

## Claims

1. Inter-vehicle distance control system for motor vehicles, having a sensor system (12) for acquiring data about a target object (18) and about the driver's own vehicle (10), an actuator system (16) for controlling the longitudinal movement of the vehicle (10), a controller (14) which intervenes in the actuator system (16) within specific intervention limits (Lim1, Lim2) in order to comply with a defined control objective in terms of the distance from the target object (18), and an output device (20) for outputting a transfer request (FüA) to the driver if the control objective cannot be complied with, having a prediction system (22) for predicting a conflict situation in which the control objective cannot be complied with and for triggering the transfer request (FüA) before the conflict situation occurs, **characterized in that** the prediction system (22) comprises vehicle movement dynamics models (26, 28) of the target object (18) and of the driver's own vehicle (10) for calculating prediction values (vEGO), xXO) for vehicle movement dynamics variables of the driver's own vehicle and of the target object at a specific prediction time (tPräd).

2. Inter-vehicle distance control system according to Claim 1, **characterized in that** the prediction system (22) is designed to calculate a predicted setpoint distance and a predicted actual distance between the target object (18) and the driver's own vehicle (10) at the prediction time (tPräd) from the prediction values, and to trigger the transfer request (FüA) if the relationship between the setpoint distance and actual distance meets a specific triggering criterion.

3. Inter-vehicle distance control system according to Claim 2, **characterized in that** the triggering criterion is a threshold value for the quotient formed from the actual distance and the setpoint distance.

4. Inter-vehicle distance control system according to one of Claims 1 to 3, **characterized by** an adaptation module (24) which is designed to vary dynamically the prediction time (tPräd) as a function of data which are made available by the sensor system (12).

5. Inter-vehicle distance control system according to one of Claims 1 to 4, **characterized by** an adaptation module (24) which is designed to vary dynamically the triggering criterion for the transfer request (FüA) as a function of data which are made available by the sensor system (12).

## Revendications

1. Système de régulation de distance pour véhicules automobiles, qui présente
un système (12) de détecteurs qui saisit des données concernant un objet cible (18) et des données concernant le véhicule propre (10), un système (16) d'actionneurs qui commande le déplacement longitudinal du véhicule (10), un régulateur (14) qui agit sur le système (16) d'actionneurs à l'intérieur de limites définies d'action (Lim1, Lim2) en vue de respecter une consigne de régulation définie de la distance par rapport à l'objet cible (18),
un dispositif de sortie (20) qui délivre au conducteur une invitation (FÜA) à reprendre la conduite lorsque la consigne de régulation ne peut être respectée et
un système prédictif (22) qui prédit une situation de conflit dans laquelle la consigne de régulation ne peut être respectée et qui déclenche l'invitation (FÜA) à reprendre la conduite avant que survienne la situation de conflit,
**caractérisé en ce que**
le système prédictif (22) contient des modèles dynamiques (26, 28) de suivi de l'objet cible (18) et de conduite du véhicule propre (10) qui calculent des valeurs de prédiction (vEGO), xZO) des variables dynamiques de conduite du véhicule propre et de suivi de l'objet cible en un instant de prédiction (tPräd) défini.

2. Système de régulation de distance selon la revendication 1, **caractérisé en ce que** le système prédictif (22) est configuré pour calculer à partir des valeurs de prédiction une distance de consigne prévisible et une distance effective prévisible entre l'objet cible (18) et le véhicule propre (10) à l'instant de prédiction (tPräd) et pour déclencher l'invitation (FÜA) à reprendre la conduite lorsque la relation entre la distance de consigne et la distance effective satisfait un critère défini de déclenchement.

3. Système de régulation de distance selon la revendication 2, **caractérisé en ce que** le critère de déclenchement est une valeur de seuil du quotient entre la distance effective et la distance de consigne.

4. Système de régulation de distance selon l'une des revendications 1 à 3, **caractérisé par** un module d'adaptation (24) configuré pour modifier dynamiquement l'instant de prédiction (tPräd) en fonction de données qui sont délivrées par le système (12) de détecteurs.

5. Système de régulation de distance selon l'une des revendications 1 à 4, **caractérisé par** un module d'adaptation (24) configuré pour modifier dynamiquement le critère de déclenchement de l'invitation (FÜA) à reprendre le conduite en fonction de données délivrées par le système (12) de détecteurs.
